# EUROPÄISCHE PATENTSCHRIFT

(11) **EP 0 832 380 B1**
(45) Veröffentlichungstag und Bekanntmachung des Hinweises auf die Patenterteilung: **14.08.2002**
(21) Anmeldenummer: 96914040.9
(22) Anmeldetag: 04.06.1996
(51) Int. Cl.: F16J 15/26

(54) **DROSSELANORDNUNG**
THROTTLE ARRANGEMENT
DISPOSITIF D'ETRANGLEMENT

(30) Priorität: 14.06.1995 EP 95810398
(43) Veröffentlichungstag der Anmeldung: 01.04.1998
(73) Patentinhaber: Maschinenfabrik Sulzer-Burckhardt AG, 8404 Winterthur (CH)
(72) Erfinder: FEISTEL, Norbert, CH-8408 Winterthur (CH)
(74) Vertreter: Graf, Seifert & Partner
(86) Internationale Anmeldenummer: CH9600212
(87) Internationale Veröffentlichungsnummer: WO9700393

(56) Entgegenhaltungen:
- CH-A- 439 897
- CH-A- 501 169
- DE-C- 4 201 246
- FR-A- 2 129 657
- GB-A- 2 060 092
- GB-A- 2 219 636
- US-A- 2 914 348

## Beschreibung

Die Erfindung betrifft eine Drosselanordnung gemäss dem Oberbegriff von Anspruch 1.

Dichtungsringe sind üblicherweise paarweise in einer Reihenschaltung hintereinander angeordnet und bilden derart eine sogenannte Packung. Der auf die einzelnen Dichtungsringe wirkende Differenzdruck bewirkt die Anpressung derer Dichtflächen an die Gleitfläche des abzudichtenden Körpers, beispielsweise einer Kolbenstange. Auf der einen Seite der Packung ist zusätzlich eine Drosselanordnung, umfassend mindestens einen Drosselring angeordnet. Eine solche Packung mit Drossel- und Dichtungsringen ist zum Beispiel aus dem Patent CH 439 897 bekannt. Der Drosselring dieser bekannten Anordnung weisen den Nachteil auf, dass pulsierende Druckanteile nur ungenügend gedämpft werden. Dies führt zu einem raschen Verschleiss der nachfolgend angeordneten Dichtungsringe.

In der CH-A-501 169 wird eine aus mehreren Dichtungseinheiten bestehende Dichtung für Kolbenstangen und Kolben von Kolbenmaschinen offenbart, wobei jede Dichtungseinheit aus einem Stützring, einem Dichtungsring mit einem Stoss und einem nach innen spannenden Deckring besteht. Die ebenen Schnittflächen des Stosses des Dichtungsrings bilden mit der Tangente an die Mantelfläche der Kolbenstange einen Winkel von 20° bis 60°.

Es ist Aufgabe der vorliegenden Erfindung diese bekannten Nachteile von Drosselringen zu überwinden.

Diese Aufgabe wird gelöst gemäss den Merkmalen von Anspruch 1. Die Unteransprüche 2 bis 11 beziehen sich auf weitere vorteilhafte Ausführungsformen.

Die erfindungsgemässe Drosselanordnung umfasst einen Drosselring, der in einer bevorzugten Ausführungsform aus einem einzigen Teil besteht mit einem einen Spalt bildenden Stoss. Der Drosselring weist zudem ein elastisches Verhalten auf. Die Drosselanordnung umfasst weiter einen Stützring, der in axialer Richtung unmittelbar neben dem Drosselring anliegend angeordnet ist, wobei der Stützring unter anderem dazu dient, den Stoss des Drosselringes abzudecken, sodass die Drosselanordnung im Bereich des Stosses eine Dichtigkeit aufweist. Der Drosselring benötigt keine weiteren Elemente wie z.B. eine den Ring umspannende Schlauchfeder. Der Drosselring wird direkt an die Gleitfläche des abzudichtenden Körpers z. B. einer Kolbenstange angelegt. Ein Vorteil der Drosselanordnung mit einem elastisch federnden und einen Stoss aufweisenden Drosselring ist darin zu sehen, dass der Drosselring auf dynamische Druckänderungen reagiert und dabei seine Dichteigenschaften verändert. Die erfindungsgemässe Drosselanordnung eignet sich insbesondere zum Dämpfen von Druckspitzen, wie sie z. B. an der Kolbenstange eines trockenlaufenden Kolbenkompressors auftreten können. Eine Druckspitze verursacht an der Drosselanordnung eine erhöhte Druckdifferenz, wodurch der elastische Drosselring an die Gleitfläche der Kolbenstange angepresst wird und eine erhöhte Dichtigkeit bewirkt, so dass sich die Druckspitze nicht zu einem der Drosselanordnung nachgelagerten Dichtungsring fortpflanzen kann. Der erfindungsgemässe Drosselring ist als ein hochgradig undichter Ring ausgestaltet, der konstante Druckanteile kaum abdichtet. Der erfindungsgemässe Drosselring weist jedoch aufgrund seiner elastischen Eigenschaften bei dynamischen Druckanteilen ein gegenüber der Kolbenstange hohes Formanpassungsvermögen auf, so dass er infolge eines dynamischen Druckanstieges an der Kolbenstange anliegt und vermehrt abdichtet. Das hohe Formanpassungsvermögen wird unter anderem dadurch ermöglicht, dass der Drosselring in Umfangsrichtung einen einen Spalt bildenden Stoss aufweist. Der Stoss ist derart ausgebildet, dass sich dieser auch beim dynamischen Anpressen des Drosselringes an die Kolbenstange nicht schliesst, um dadurch ein möglichst vorteilhaftes Formanpassungsvermögen zu erzielen. Die erfindungsgemässe Drosselanordnung weist den Vorteil auf, dass sie nur dynamisch veränderliche Druckanteile abdichtet, wobei das Ansprechvermögen der Drosselanordnung durch die geometrische Ausgestaltung des Drosselringes, dessen elastischen Eigenschaften und weiteren Parametern wie Materialwahl in weiten Grenzen variierbar ist. Die Drosselanordnung verhält sich somit analog einer aus der Elektrotechnik bekannten Frequenzweiche, indem hochfrequente Druckänderungen abgedichtet werden, wogegen statische oder sich langsam verändernde Druckanteile nicht abgedichtet werden.

Die Erfindung wird anhand von mehreren Ausführungsbeispielen im weiteren beschrieben.

Es zeigen:
- Fig. 1a: eine Aufsicht auf einen Stützring;
- Fig. 1b: eine Aufsicht auf einen Drosselring;
- Fig. 1c: ein weiteres Ausführungsbeispiel eines Stützringes;
- Fig. 1d: einen Querschnitt durch einen Drosselring entlang der Linie A-A gemäss Fig. 1b;
- Fig. 1e: eine exzentrische Ausführung eines Drosselringes;
- Fig. 1f: einen Querschnitt sowie eine perspektivische Ansicht einer Drosselanordnung;
- Fig. 2: einen Radialschnitt durch eine erfindungsgemässe Drosselanordnung im montierten Zustand;
- Fig. 2a: eine Sicht entlang des Schnittes B-B gemäss Fig. 2;
- Fig. 2b: einen weiteren Radialschnitt der erfindungsgemässen Drosselanordnung im montierten Zustand und
- Fig. 3: ein Verlauf eines Druckes in Funktion der Zeit.

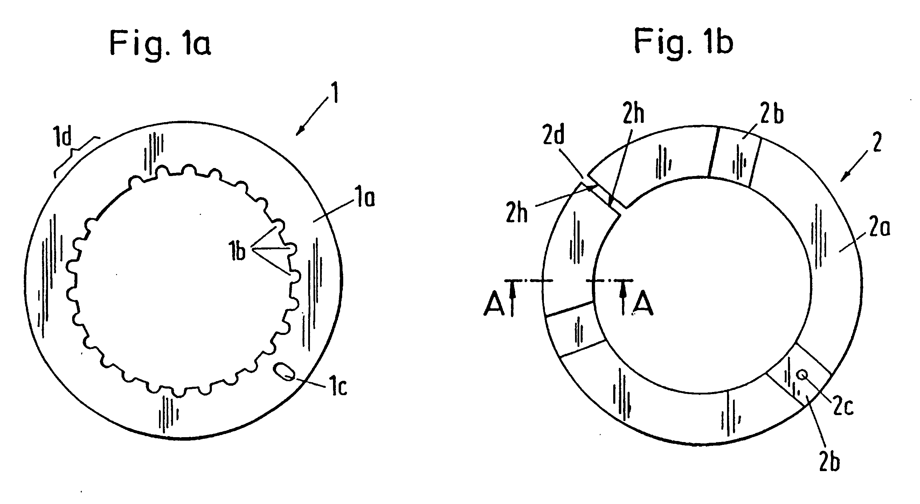

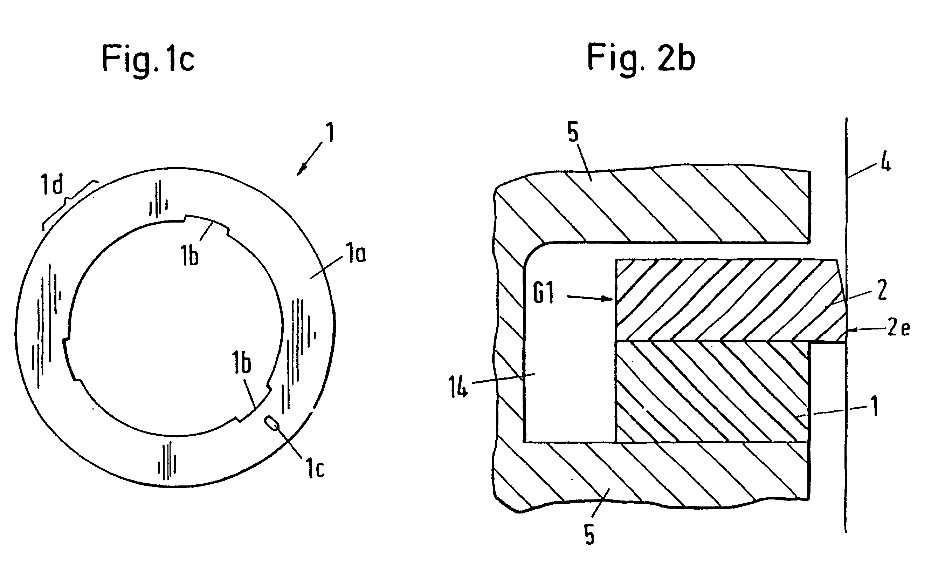

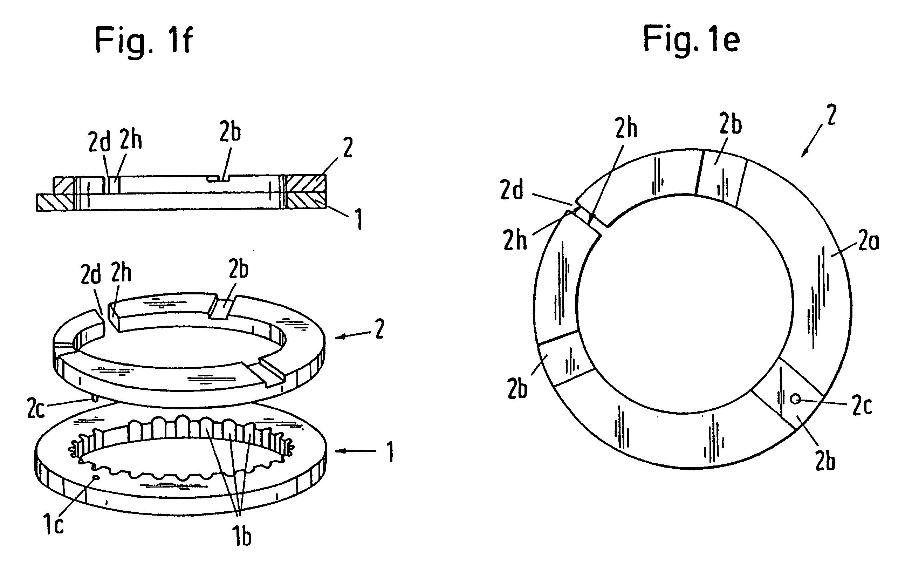

Die erfindungsgemässe Drosselanordnung umfasst einen Drosselring 2 sowie einen in axialer Richtung anliegenden Stützring 1. Der in Fig. 1a sowie Fig. 1f dargestellte Stützring 1 weist eine Ringfläche 1a auf, eine Ausnehmung 1c die als Führung für einen Fixierstift 2c dient, sowie an der der Kolbenstange 4 zugewandten Fläche Ausnehmungen 1b. Die Ausnehmungen 1b verlaufen über die ganze Breite des Stützringes 1. Weiter weist der Stützring 1 einen in Umfangsrichtung verlaufenden Abdeckbereich 1d auf, der über den Stoss 2d des Drosselringes 2 zu liegen kommt, um den Stoss 2d in axialer Richtung, bzw. in Verlaufrichtung einer Kolbenstange 4 abzudichten. Der Stützring 1 ist als ein sogenannter endloser Ring aufgeführt, was auch als ein ungeschnittener Ring bezeichnet wird. Dies bedeutet, dass der Stützring keinen Stoss aufweist sondern in Umfangsrichtung ohne Unterbruch ausgestaltet ist.

Fig. 1b zeigt einen Drosselring 2 mit einem Ringkörper 2a sowie in radialer Richtung verlaufende Nuten 2b, einen Fixierstift 2c, der zylinderförmig vorsteht, sowie auf der dem Fixierstift 2c gegenüberliegenden Seite einen Stoss 2d. Der Drosselring 2 weist elastische, federnde Eigenschaften auf. Die Breite des Stosses 2d ist derart dimensioniert, dass der Drosselring 2 eine Kolbenstange 4 vollständig umschliessen kann, ohne dass sich im Stoss 2d eine gegenseitige Berührung des Ringkörpers 2a ergibt. Dadurch ist gewährleistet, dass der Drosselring 2 gegenüber der Kolbenstange 4 ein vorteilhaftes Formanpassungsvermögen aufweist. Würde sich im Stoss 2d eine gegenseitige Berührung der beiden aufeinandertreffenden Stossflächen 2h ergeben, so würde dies bewirken, dass der Drosselring 2 in einen Teilbereich nicht auf der Kolbenstange 4 aufliegt.

Der Stützring 1 und der Drosselring 2 sind derart zusammensetzbar, dass der vorstehende Fixierstift 2c des Drosselringes 2 in die Ausnehmung 1c eingelegt wird, so dass der Stützring eine definierte Lage gegenüber dem Drosselring 2 einnimmt und so dass gewährleistet ist, dass der Abdeckbereich 1d über den Stoss 2d zu liegen kommt.

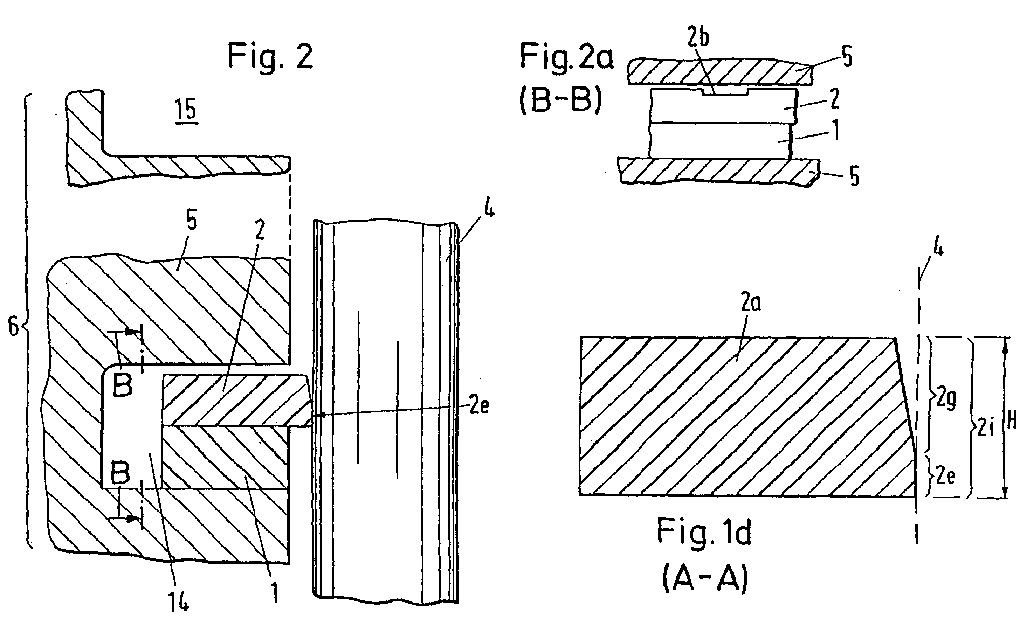

Fig. 1c zeigt ein weiteres Ausführungsbeispiel eines Stützringes 1 mit Ringfläche 1a, Ausnehmung 1c und Ausnehmungen 1b. Fig. 1d zeigt ein Ausführungsbeispiel eines Querschnittes durch den Drosselring 2 entlang der Linie A-A gemäss Fig. 1b. Der Ringkörper 2a kann rechteckig ausgestaltet sein, oder wie im vorliegenden Ausführungsbeispiel derart, dass die der Kolbenstange 4 zugewandte Fläche 2i des Ringkörpers 2a eine Dichtfläche 2e aufweist, sowie einen sich mit zunehmendem Abstand von der Oberfläche der Kolbenstange 4 erweiternden Teil 2g. Der Ringkörper 2a weist in axialer Richtung eine Höhe H auf.

Fig. 1e zeigt einen Drosselring 2, dessen Breite in radialer Richtung im Bereich des Fixierstiftes 2c am grössten ist, wobei die Breite gegen den Spalt 2d hin kontinuierlich abnimmt. Ein derart ausgestalteter Drosselring 2 weist den Vorteil auf, dass er eine Kolbenstange sehr gleichmässig umfassen kann. Eine vom Drosselring 2 umschlossene Kolbenstange 4 verläuft exzentrisch bezüglich der äusseren Umfangslinie des Drosselrings 2. Der Stoss 2d beziehungsweise die Stossflächen 2h verlaufen in radialer Richtung und somit senkrecht zur Oberfläche der Kolbenstange 4. Ein derartiger, sogenannter Geradstoss eignet sich sehr gut für den erfindungsgemässen Drosselring 2, da sich die beiden Stossflächen 2h behinderungsfrei gegenseitig verschieben lassen, und der Drosselring 2 somit ohne eine Behinderung durch den Stoss 2d an der Kolbenstange 4 anliegen kann.

Fig. 2 zeigt einen Radialschnitt durch eine in einem Kolbenkompressor angeordnete Drosselanordnung. Die Drosselanordnung ist in einem Kammerring 5 angeordnet, welcher Teil einer Packung 6 ist, die in einen Zylinderraum 15 mündet. Die Drosselanordnung mit Drosselring 2 und Stützring 1 ist in einer Kammer 14 angeordnet.

Fig. 2a zeigt einen Schnitt aus der Sicht gemäss der Linie B-B. Daraus ist die Anordnung der Drosselanordnung mit Drosselring 2 und Stützring 1 in der Kammer 14 erkennbar. Weiter ist der Verlauf der radial verlaufenden Nut 2b eines Drosselringes 2 erkennbar.

Fig. 2b zeigt die Drosselanordnung gemäss Fig. 2a in einer vergrösserten Ansicht. Eine Druckspitze bewirkt, dass sich die Druckdifferenz als eine in radialer Richtung wirkende Kraft G1 auf den Drosselring 2 auswirkt, so dass dieser mit der Dichtfläche 2e gegen die Kolbenstange 4 gepresst wird, woraus über der Dichtfläche 2e ein erhöhter Druckabfall resultiert. Die Kammer 14 ist in axialer Richtung durch den Stützring 1, der auf dem Kammerring 5 aufliegt sowie dem Drosselring 2 abgedichtet, so dass sich die Druckspitze nicht in nachgelagerte Packungsbereiche fortpflanzt.

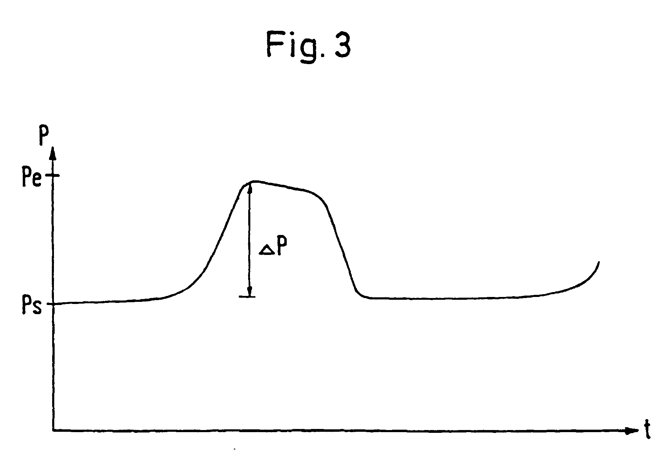

Fig. 3 zeigt einen Druckverlauf, wie er vom Zylinderraum 15 her auf die Drosselanordnung auftrifft. Der Druckverlauf weist einen ungefähr statischen Druck Ps auf, der von dynamischen Druckspitzen mit einer Druckerhöhung Δp und einem Druckspitzenwert Pe überlagert ist. Die Drosselanordnung erlaubt den dynamischen Druckanteil mit Druckerhöhung Δp abzudichten, so dass an den nachfolgenden Dichtungsanordnungen der Packung 6 ein ungefähr konstanter Druck anliegt.

Als Material für den Drosselring 2 oder den Stützring 1 sind Kunststoffe geeignet, wie zum Beispiel Polytetrafluorethylen (PTFE), modifizierte Hochtemperatur-Polymer wie Polyetheretherketon(PEEK), Polyetherketon(PEK), Polyimid (PI), Polyphenylensulfid (PPS), Polybenzimidazol (PBI), Polyamidimid (PAI) oder auch modifizierte Epoxidharz.

## Patentansprüche

1. Drosselanordnung umfassend einen Drosselring (2) mit einem Stoss (2d) sowie einen neben dem Drosselring (2) anschliessend angeordneten Stützring (1) zum Abdecken des Stosses (2d), wobei der Drosselring (2) derartige elastische Eigenschaften hat, dass er bezüglich statischer Druckanteile undicht ist und bezüglich dynamischer Druckanteile eine erhöhte Dichtwirkung aufweist.

2. Drosselanordnung nach Anspruch 1, **dadurch gekennzeichnet, dass** der Stützring (1) ein Segmentteil (1d) aufweist, welches derart ausgeschaltet und angeordnet ist, dass der Stoss (2d) in radialer Richtung vollständig abgedeckt ist.

3. Drosselanordnung nach Anspruch 1 oder 2, **dadurch gekennzeichnet, dass** der Drosselring (2) aus einem elastische Eigenschaften aufweisenden Kunststoff besteht.

4. Drosselanordnung nach einem der Ansprüche 1 bis 3, **dadurch gekennzeichnet, dass** der Drosselring (2) in radialer Richtung eine konstante Breite aufweist.

5. Drosselanordnung nach einem der Ansprüche 1 bis 3, **dadurch gekennzeichnet, dass** die Breite des Drosselrings (2) in radialer Richtung auf der dem Stoss (2d) gegenüberliegenden Seite am grössten ist und gegen den Stoss (2d) hin abnimmt.

6. Drosselanordnung nach einem der Ansprüche 1 bis 5, **dadurch gekennzeichnet, dass** der Drosselring (2) in radialer Richtung verlaufende Nuten (2b) aufweist.

7. Drosselanordnung nach einem der Ansprüche 1 bis 6, **dadurch gekennzeichnet, dass** der Drosselring (2) sowie der Stützring (1) ein gemeinsames Verbindungsmittel (1c, 2c) aufweisen, um die Ringe (1, 2) in einer gegenseitig festgelegten Lage zu halten.

8. Drosselanordnung nach einem der Ansprüche 1 bis 7, **dadurch gekennzeichnet, dass** der Stützring (1) als ein endloser Ring ausgestaltet ist.

9. Drosselanordnung nach einem der Ansprüche 1 bis 8, **dadurch gekennzeichnet, dass** der Stützring (1) einen Innenkreis umschliesst, und auf der dem Innenkreis zugewandten Seite durchgehende Ausnehmungen (1b) aufweist.

10. Drosselanordnung nach einem der Ansprüche 1 bis 7, **dadurch gekennzeichnet, dass** der Drosselring (2) eine axiale Höhe (H) aufweist, und dass die dem Zentrum des Drosselrings zugewandte Fläche (2i) über einen Teil (2e) der Höhe (H) zylindrisch verlaufend ausgestaltet ist, und über einen weiteren Teil (2g) sich erweiternd ausgestaltet ist.

11. Drosselanordnung nach einem der Ansprüche 1 bis 10, **dadurch gekennzeichnet, dass** der Drosselring (2) und/oder der Stützring (1) aus Kunststoff wie Polytetrafluorethylen (PTFE), einem modifiziertem Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) oder einem modifiziertem Epoxidharz besteht.

12. Dichtungspackung mit einer Drosselanordnung nach einem der Ansprüche 1 bis 11 sowie mit mindestens einem der Drosselanordnung nachgelagerten Dichtring.

13. Kolbenkompressor mit einer Drosselanordnung nach einem der Ansprüche 1 bis 11.

## Claims

1. Choke arrangement comprising a choke ring (2) with a parting joint (2d) as well as a support ring (1) arranged adjacent to and adjoining the choke ring (2) for the covering over of the parting joint (2d), wherein the choke ring (2) has such elastic properties that the choke ring is leaky with respect to constant pressure components and has an increased sealing action with respect to dynamic pressure components.

2. Choke arrangement in accordance with claim 1 **characterised in that** the support ring (1) has a segment part (1d) which is executed and arranged in such a manner that the parting joint (2d) is completely covered in the radial direction.

3. Choke arrangement in accordance with claim 1 or 2 **characterised in that** the choke ring (2) consists of a plastic having elastic properties.

4. Choke arrangement in accordance with one of the claims 1 to 3 **characterised in that** the choke ring (2) has a constant width in the radial direction.

5. Choke arrangement in accordance with one of the claims 1 to 3 **characterised in that** the width of the choke ring (2) in the radial direction is greatest at the side lying opposite to the gap (2d) and diminishes towards the gap (2d).

6. Choke arrangement in accordance with one of the claims 1 to 5 **characterised in that** the choke ring (2) has grooves (2b) extending in the radial direction.

7. Choke arrangement in accordance with one of the claims 1 to 6 **characterised in that** the choke ring (2) as well as the support ring (1) have a common connection means (1c, 2c) in order to hold the rings (1, 2) in a mutually fixed position.

8. Choke arrangement in accordance with one of the claims 1 to 7 **characterised in that** the support ring (1) is executed as an endless ring.

9. Choke arrangement in accordance with one of the claims 1 to 8 **characterised in that** the support ring (1) surrounds an inner circle and has through-going cutouts (1b) on the side facing the inner circle.

10. Choke arrangement in accordance with one of the claims 1 to 7 **characterised in that** the choke ring (2) has an axial height (H), and **in that** the surface (2i) facing the centre of the choke ring is made to extend cylindrically over a portion (2e) of the height (H) and is made divergent over a further portion (2g).

11. Choke arrangement in accordance with one of the claims 1 to 10 **characterised in that** the choke ring (2) and/or the support ring (1) consists of a plastic such as polytetrafluoroethylene (PTFE), a modified high-temperature polymer such as poly(ether ether ketone) (PEEK), poly(ether ketone) (PEK), polyimide (PI), poly(phenylene sulphide) (PPS), polybenzimidazole (PBI), polyamideimide (PAI) or a modified epoxy resin.

12. Sealing packing with a choke arrangement in accordance with one of the claims 1 to 11 and with at least one sealing ring succeeding the choke arrangement.

13. Piston compressor with a choke arrangement in accordance with one of the claims 1 to 11.

## Revendications

1. Agencement d'étranglement comprenant un anneau d'étranglement (2) avec une coupure (2d) ainsi qu'un anneau d'appui (1) disposé à la suite à côté de l'anneau d'étranglement (2) pour recouvrir la coupure (2d), où l'anneau d'étranglement (2) a des caractéristiques élastiques telles qu'il n'est pas étanche relativement à des parts de pression statiques et qu'il présente un plus grand effet d'étanchéité relativement à des parts de pression dynamiques.

2. Agencement d'étranglement selon la revendication 1, **caractérisé en ce que** l'anneau d'appui (1) présente une partie de segment (1d) qui est configurée et disposée de façon que la coupure (2d) soit entièrement recouverte dans la direction radiale.

3. Agencement d'étranglement selon la revendication 1 ou 2, **caractérisé en ce que** l'anneau d'étranglement (2) est réalisé en un matériau synthétique présentant des caractéristiques élastiques.

4. Agencement d'étranglement selon l'une des revendications 1 à 3, **caractérisé en ce que** l'anneau d'étranglement (2) présente dans la direction radiale une largeur constante.

5. Agencement d'étranglement selon l'une des revendications 1 à 3, **caractérisé en ce que** la largeur de l'anneau d'étranglement (2) est la plus grande dans la direction radiale au côté opposé à la coupure (2d) et diminue vers la coupure (2d).

6. Agencement d'étranglement selon l'une des revendications 1 à 5, **caractérisé en ce que** l'anneau d'étranglement (2) présente des rainures (2b) s'étendant dans la direction radiale.

7. Agencement d'étranglement selon l'une des revendications 1 à 6, **caractérisé en ce que** l'anneau d'étranglement (2) ainsi que l'anneau d'appui (1) présentent un moyen de liaison commun (1c, 2c) pour maintenir les anneaux (1, 2) dans une position mutuellement fixée.

8. Agencement d'étranglement selon l'une des revendications 1 à 7, **caractérisé en ce que** l'anneau d'appui (1) est réalisé sous forme d'anneau sans fin.

9. Agencement d'étranglement selon l'une des revendications 1 à 8, **caractérisé en ce que** l'anneau d'appui (1) renferme un cercle intérieur et présente au côté orienté vers le cercle intérieur des évidements traversants (1b).

10. Agencement d'étranglement selon l'une des revendications 1 à 7, **caractérisé en ce que** l'anneau d'étranglement (2) présente une hauteur axiale (H), et **en ce que** la face (2i) orientée vers le centre de l'anneau d'étranglement est réalisée pour s'étendre d'une manière cylindrique sur une partie (2e) de la hauteur (H) et est réalisée pour s'élargir sur une autre partie (2g).

11. Agencement d'étranglement selon l'une des revendications 1 à 10, **caractérisé en ce que** l'anneau d'étranglement (2) et/ou l'anneau d'appui (1) sont constitués d'un matériau synthétique, comme d'un polytétrafluoroéthylène (PTFE), d'un polymère haute température modifié tel que le polyétheréthercétone (PEEK), de polyéthercétone (PEK), de polyimide (PI), de sulfure de polyphénylène (PPS), d'imidazole de polybenzène (PBI), de polyamidimide (PAI) ou d'une résine époxy modifiée.

12. Garniture d'étanchéité avec un agencement d'étranglement selon l'une des revendications 1 à 11 et avec au moins une bague d'étanchéité disposée en aval de l'agencement d'étranglement.

13. Compresseur à piston comportant un agencement d'étranglement selon l'une des revendications 1 à 11.
